# EUROPEAN PATENT APPLICATION

(11) **EP 3 078 646 A1**
(43) Date of publication of application: **12.10.2016**
(21) Application number: 16158833.0
(22) Date of filing: 13.08.2013
(51) Int. Cl.: C04B 28/02, C04B 28/06, C04B 28/14, C04B 41/45, C04B 41/48, C09D 5/08, C04B 111/00, C04B 111/26, C04B 111/72, C04B 28/04

(54) **MULTI-PURPOSE MORTAR OR CEMENT COMPOSITIONS FOR CONSTRUCTION APPLICATIONS**

(30) Priority: 21.08.2012 EP 12181143
(62) Divisional of application: 13748043.0
(71) Applicant: Sika Technology AG, 6340 Baar (CH)
(72) Inventor: Girot, Wilfrid, 76230 Quincampoix (FR); Lagnel, François, 76850 Bosc le Hard (FR); Donadio, Michel, 8306 Brüttisellen (CH); Lesetre, Fleur, 60590 Serifontaine (FR)
(74) Representative: Sika Patent Attorneys

(57) **Abstract**

The present invention relates to a multi-purpose mortar or cement composition for (i) inhibiting the corrosion of steel in mortar or cement structures, (ii) repairing, filling and/or spraying damages, cracks, flaws and cavities in mortar or cement structures and/or (iii) surfacing, coating and/or protecting mortar or concrete surfaces.

The present invention further relates to methods of preparation and use of the multi-purpose mortar or cement composition.

## Description

### FIELD OF THE INVENTION

The present invention relates to a multi-purpose mortar or cement composition for (i) inhibiting the corrosion of steel in mortar or cement structures, (ii) repairing, filling and/or spraying damages, cracks, flaws and cavities in mortar or cement structures and/or (iii) surfacing, coating and/or protecting mortar or concrete surfaces.

### BACKGROUND

Concrete reparation is a strongly regulated activity. There are many standards to meet, which impose high product performance level.

Repairing damaged concrete often requires a system of mortars. The user typically has to use several products to carry out the reparation works. The system may optionally comprise a bonding primer, reinforcement corrosion protection, re-profiling mortar and levelling / smoothing layer. These are commonly 3 or 4 different types of products, which has the disadvantages of being costly and requiring additional packaging and storage space.

Very few multi-purpose mortars exist on the market. None of them have all three following functions in one single product:
- restoring and preserving passivity of steel bars
- concrete reparation
- concrete surfacing and protection.

That is because combining all three properties into a single product presents a great technical challenge, in part because a product approved for each application/function must meet different standards.

In fact, to our knowledge, the only multi-purpose mortar product currently commercially available is Planitop Smooth & Repair from the company MAPEI®. This product, however, only fulfills two functions: concrete reparation and concrete surfacing.

In Europe, a mortar suitable for all three above-properties/uses should fulfill the three following standards: EN 1504-7, EN 1504-2 and EN 1504-3/R2 class.

One major hurdle for succeeding in designing such a product has to do with the capacity to obtain the right technical compromise between the three different uses/ purposes.

First, optimization of the formulation to attain the right granulometry is problematic. On the one hand, the particle size has to be fine enough for the product to be applied in very thin layers (surfacing application). On the other hand, fine granulometry can sharpen shrinkage and entail the appearance of cracks once the mortar applied in thicker layers (reparation application).

In addition, designing a mortar that has the desired anti-corrosion properties, and meets the stringent standard EN 1504-7 is a very difficult challenge. This European standard is more geared towards paint products, which generally have a different and more adapted viscosity and consistency than mortars to fulfill standardized requirements.

Furthermore, to control the shrinkage of the product for each of the three applications/uses is far from being an easy task. Each version of the product (i.e., anti-corrosion, reparation, and surfacing) implies the presence of different amounts of water (to reach the proper viscosity and consistency suitable for each application), which inevitably leads to different shrinkage behaviours.

Accordingly, there remains a great need/challenge to develop mortar or cement compositions that fulfils all three properties into a single product: anti-corrosion, reparation, and surfacing.

### DESCRIPTION

The present invention provides a solution to this problem by providing in one aspect a multi-purpose mortar or cement composition for (i) inhibiting the corrosion of steel in mortar or cement structures, (ii) repairing, filling and/or spraying damages, cracks, flaws and cavities in mortar or cement structures and/or (iii) surfacing, coating and/or protecting mortar or concrete surfaces.

As stated above, optimization of a mortar or cement formulation to attain the right granulometry is problematic: fine granulometry can sharpen shrinkage and entail the appearance of cracks once the mortar applied in thicker layers (reparation application). As the introduction of bigger particles is not possible in the case of the invention, the only way to prevent the formation of cracks is to find the right combination of specific anti-shrinkage agents and to adjust as far as possible the reactivity of the binders.

In addition, each kind of "properties" (anti-corrosion, reparation and surfacing) requiring specific pot-life and hardened properties to fit with applicator's requirements, binders has to be selected according to their reactivity and the composition of the mortar adjusted to answer customers' needs for each purpose. As a consequence, the selection of the right additives is a technical challenge as their solubility and granulometry can have a big influence on the properties at fresh and hardened states of the cementitious composition.

Advantageously, the multi-purpose mortar or cement composition comprises:
at least one cementitious binder
at least one filler and sands
at least one antifoam agent
at least one fibre component
at least one anti-corrosion agent
at least one plasticizer or superplasticizer
at least one accelerator
at least one anti-shrinkage agent
and at least one polymer, redispersable polymer or co-polymer.

Advantageously, the multi-purpose mortar or cement composition comprises (% by weight, calculated on the total weight of the composition):
15 to 40 % of at least one cementitious binder
50 to 80 % of at least one filler and sands
0.05 to 1.5 % of at least one antifoam agent
0.05 to 1.2 % of at least one fibre component
0.05 to 3.2 % of at least one anti-corrosion agent
0.05 to 1.2 % of at least one plasticizer or superplasticizer
0.1 to 3.5 % of at least one accelerator
0.1 to 4.2 % of at least one anti-shrinkage agent
0.1 to 3,5 % of at least one polymer, redispersable polymer or co-polymer,
wherein the sum of the weight % of the aforementioned components is 100%.

In the present document, substance names beginning with "poly", such as, for example, polyglycol, polyethylene, polyvinyl alcohol, polyol, polycarboxylated ether, polyvinyl acetate or polyvinyl ester, designate substances which formally contain, per molecule, two or more of the functional groups occurring in their name.

In the present document, the term "polymer" encompasses firstly a group of chemically uniform macromolecules which however differ with respect to the degree of polymerization, molar mass and chain length, which group was prepared by a polyreaction (polymerization, polyaddition, polycondensation). Secondly, the term also encompasses derivatives of such a group of macromolecules from polyreactions, i.e. compounds which were obtained by reactions, such as, for example, additions or substitutions, of functional groups on specified macromolecules and which may be chemically uniform or chemically nonuniform. Furthermore, the term also encompasses so-called prepolymers, i.e. reactive oligomeric preadducts whose functional groups are involved in the synthesis of macromolecules.

In the present document, the term "polyol" encompasses any desired polymer according to the above definition which has more than one hydroxyl group.

The term "pot life" is understood as meaning the duration of processability of reactive compositions after their mixing with water. The end of the pot life is in most cases associated with a viscosity increase of the composition such that expedient processing of the composition is no longer possible.

Advantageously, the multi-purpose mortar or cement composition according to the invention comprises at least one cementitious binder. The cementitious binder may be selected from a Portland cement (such as CEM I, II, III, IV or V, according to EN 197-1), a calcium aluminate cement (CAC) (such as CAC according to EN 14647 type TERNAL® RG or FONDU® from KERNEOS), a sulfo aluminate cement, a gypsum-based binder, lime, hydrated lime, silica fume, or a mixture thereof. Advantageously, the cementitious binder represents 15 to 40 % by weight, calculated on the total weight of the composition. For example, the cementitious binder represents 25.75 % ± 10% by weight, calculated on the total weight of the composition.

Advantageously, the multi-purpose mortar or cement composition according to the invention comprises at least one filler and sands. The filler and sands may be selected among siliceous sands or fillers having a sieve curve between 0.05mm and 1.5mm, calcareous filler (such as OMYACOAT 850-OG or OMYACOAT BL 200 from OMYA), precipitated ultra fine calcium carbonate (such as SOCAL 31 from SOLVAY), or a mixture thereof. Advantageously, the filler and sands may represent 50 to 80 % by weight, calculated on the total weight of the composition. For example, the filler and sands may represent 67.80 % ± 10% by weight, calculated on the total weight of the composition. Typically, a filler, as used herein, refers to a filler which ranges below 100 □m in particle size, while filler having a particle size greater than 100 □m is referred to as a sand.

Advantageously, the multi-purpose mortar or cement composition according to the invention comprises at least one antifoam agent. The antifoam agent may be selected from a polyglycol, ethoxylate fatty alcohol, polisiloxane, or a mixture thereof [for example, LUMITEN* EP 3108 from BASF, AGITAN P813 from MUNZIG, AXILAT™ DF 6352 DD from MOMENTIVE may be used]. Advantageously, the antifoam agent may represent 0.05 to 1.5 % by weight, calculated on the total weight of the composition. For example, the antifoam agent may represent 0.10 % ± 1% by weight, calculated on the total weight of the composition.

Advantageously, the multi-purpose mortar or cement composition according to the invention comprises at least one fibre component. The fibre component may be selected from a polyolefines fibres (such as polyethylene or poplypropylene), nitryl, polyvinyl alcohol (PVA), glass with or without anti-alkaline protection, cellulose, flax or hemp fibre component, or a mixture thereof [For example, SIKACRACKSTOP® 6 or 12mm from SIKA, KURALON RF 1000 from KURARAY, FIBRAFLEX from SAINT-GOBAIN, CEM-FIL® ANTI-CRACK™ HP from SAINT-GOBAIN, ARBOCEL® from JRS, FIBREMESH® from FIBREMESH® may be used]. Advantageously, the fibre component may represent 0.05 to 1.2 % by weight, calculated on the total weight of the composition. For example, the fibre component may represent 0.20 % ± 1 % by weight, calculated on the total weight of the composition.

Advantageously, the multi-purpose mortar or cement composition according to the invention comprises at least one anti-corrosion agent. The anti-corrosion agent may be selected from a sodium nitrite, calcium nitrite, dicyclohexylamine nitrite, mono-ethanolamine benzoate, ethanolamine benzoate, ethanolamine, diethanolamine, N.N-dimethylethanolamine, TRIS(hydroxymethyl-aminomethan), or a mixture thereof [For example, NITRITE DE SODIUM RW from BASF purity ≥ 98.7%, MONOETHANOLAMINE BENZOATE < 100µm from BRENNTAG may be used]. Advantageously, the anti-corrosion agent may represent 0.05 to 3.2 % by weight, calculated on the total weight of the composition. For example, the anti-corrosion agent may represent 1,05 % ± 2% by weight, calculated on the total weight of the composition.

Advantageously, the multi-purpose mortar or cement composition according to the invention comprises at least one plasticizer or superplasticizer. The plasticizer or superplasticizer may be selected from a polycarboxylated ether (PCE), lignosulfonate, melamine formaldehyde, or a mixture thereof [For example, SIKA®VISCOCRETE® from SIKA, FLUBE CA 140 from GIOVANNI BOZZETTO SpA, PERAMIN® COMPAC from KERNEOS may be used] Advantageously, the plasticizer or superplasticizer may represent 0.05 to 1.2 % by weight, calculated on the total weight of the composition. For example, the plasticizer or superplasticizer may represent 0.05 % ± 1 % by weight, calculated on the total weight of the composition.

Advantageously, the multi-purpose mortar or cement composition according to the invention comprises at least one accelerator. The accelerator may be selected from a calcium formate, aluminium oxide, chlorinated or unclorinated accelerator, lithium salts (such as lithium carbonate), nitrite salts (such as sodium nitrite), nitrate salts (such as calcium nitrate), or a mixture thereof [For example, CALCIUM FORMATE from LANXESS - granulometry < 0.5mm-purity : 97.5% -, PROX-MAT C-143 from SYNTHRON, SODIUM CARBONATE from BRENNTAG, GELOXAL® 10 from Industrias Quimicas del Ebro may be used]. Advantageously, the accelerator may represent 0.1 to 3.5 % by weight, calculated on the total weight of the composition. For example, the accelerator may represent 1.50 % ± 2% by weight, calculated on the total weight of the composition.

Advantageously, the multi-purpose mortar or cement composition according to the invention comprises at least one anti-shrinkage agent. The anti-shrinkage agent may be selected from powder products or flakes, such as a polyol (SITREN® PSR100 from EVONIK), coated lime, a crystalline expansive agent (such as DENKA CSA from NEUCHEM SRL), aluminium powder, azodicarbonamide, or a mixture thereof [For example, DISPELAIR P430 from BLACKBURN CHEMICALS limited, UNIFOAM AZ STD et/ou ULTRA, PERAMIN SRA 40 from KERNEOS, BLITZ EXPANDAL from BENDA-LUTZ WERKE GmbH, EXPAN K from MITSUI & CO may be used]. Advantageously, the anti-shrinkage agent may represent 0.1 to 4.2 % by weight, calculated on the total weight of the composition. For example, the anti-shrinkage agent may represent 2.035 % ± 2% by weight, calculated on the total weight of the composition.

Advantageously, the multi-purpose mortar or cement composition according to the invention comprises at least one polymer, redispersable polymer or co-polymer. The polymer, redispersable polymer or co-polymer may be selected from polyvinyl acetate, polyvinyl ester including polyvinyl acetate silane terminated polymer and polyvinyl ester silane terminated polymer, or a mixture thereof [For example, ELOTEX FL 1210 from SAINT-GOBAIN, ELOTEX MP 2100 from SAINT-GOBAIN, AXILAT HP 8510 from MOMENTIVE, AXILAT UP600B from MOMENTIVE, VINNAPAS 8031 H from WACKER - Tg comprised between 0°C to 16°C and TMMF between 0 and 8°C, may be used]. Advantageously, the polymer, redispersable polymer or co-polymer may represent 0.1 to 3,5 % by weight, calculated on the total weight of the composition. For example, the polymer, redispersable polymer or co-polymer may represent 1.5 % ± 2% by weight, calculated on the total weight of the composition.

Optionally, the multi-purpose mortar or cement composition according to the invention may comprise at least one chromium reducer. The chromium reducer may be CHROMATEX C®, which may be purchased from the company TRICOSAL CHEMIE or CEM PROTECTOR SN 100 from MIG. Advantageously, the chromium reducer may represent 0.01 to 0.1.% by weight, calculated on the total weight of the composition. For example, the chromium reducer may represent 0.02 % ± 0.05% by weight, calculated on the total weight of the composition.

Advantageously, the multi-purpose mortar or cement composition according to the invention may comprise:
25.75 % ± 10% of at least one cementitious binder
67.80 % ± 10% of at least one filler and sands
0.10 % ± 1% of at least one antifoam agent
0.20 % ± 1 % of at least one fibre component
1,05 % ± 2% of at least one anti-corrosion agent
0.05 % ± 1 % of at least one plasticizer or superplasticizer
1.50 % ± 2% of at least one accelerator
2.035 % ± 2% of at least one anti-shrinkage agent
1.5 % ± 2% of at least one polymer, redispersable polymer or co-polymer,
wherein the sum of the weight % of the aforementioned components is 100%.

Advantageously, the multi-purpose mortar or cement composition according to the invention may comprise:
25.75 % ± 10% of at least one cementitious binder
67.80 % ± 10% of at least one filler and sands
0.05-1.10% of at least one antifoam agent
0.05-1.20% of at least one fibre component
0.05-3.05% of at least one anti-corrosion agent
0.05-1.05% of at least one plasticizer or superplasticizer
0.1-3.50% of at least one accelerator
0.1-4.035% of at least one anti-shrinkage agent
0.1-3.5% of at least one polymer or co-polymer,
wherein the sum of the weight % of the aforementioned components is 100%.

Optionally, the multi-purpose mortar or cement composition according to the invention may additionally comprise 0.02% ± 0.05% of chromium reducer, wherein the sum of the weight % of the aforementioned components is 100%.

The multi-purpose mortar or cement composition according to the invention may further comprise conventional admixtures like air entraining admixtures, defoamers, retarders, set accelerators, hardening accelerators, hydrophobising or shrinkage reducing admixtures.

The multi-purpose mortar or cement composition according to the invention may be prepared by mixing and blending together all the components according to conventional methods.

In another aspect, there is provided a wet mortar or cement composition, comprising a multi-purpose mortar or cement composition according to any one of the previous embodiments and 13.60 to 20.40 % by weight of water relative to the weight of the multi-purpose mortar or cement composition, depending on the intended use of the wet composition (i.e., anti-corrosion, repair, or resurfacing).

### Anti-corrosion mortar or cement composition

In another aspect, there is provided an anti-corrosion mortar or cement composition for inhibiting the corrosion of steel in mortar or cement structures, comprising a multi-purpose mortar or cement composition according to any one of the previous embodiments and 18.40 to 20.40 % by weight of water relative to the weight of the multi-purpose mortar or cement composition.

Such anti-corrosion mortar or cement composition may be readily and simply prepared by adding a suitable amount of water to a multi-purpose mortar or cement composition according to any one of the previous embodiments.

Accordingly, there is provided a process for preparing an anti-corrosion mortar or cement composition for inhibiting the corrosion of steel in mortar or cement structures, comprising a step of mixing a multi-purpose mortar or cement composition according to any one of the previous embodiments with 18.40 to 20.40 % by weight of water based on the weight of the multi-purpose mortar or cement composition.

In yet another aspect, there is also provided a method for inhibiting the corrosion of steel in mortar or cement structures, the method comprising applying an anti-corrosion mortar or cement composition according to any one of the preceding embodiments to a steel piece of the mortar or cement structure.

There is also provided a method for inhibiting the corrosion of steel in mortar or cement structures, the method comprising:
a) providing an anti-corrosion mortar or cement composition comprising a multi-purpose mortar or cement composition according to any one of the preceding embodiments and 18,40 to 20,40 % by weight of water relative to the weight of the multi-purpose mortar or cement composition; and
b) applying the anti-corrosion mortar or cement composition obtained in step a) to a steel piece of the structure.

The anti-corrosion mortar or cement composition, once applied, may be allowed to set and dry, in particular prior to applying any other products.

The water content allows the anti-corrosion mortar or cement composition to reach the consistency of a paint. It can therefore be applied to steel pieces in mortar or cement structures with a brush or paint-brush.

The water content may range between 18.40 to 20.40 %, preferably 18.50 to 20.00 %, more preferably about 19 % by weight of water based on the weight of the multi-purpose mortar or cement composition.

The anti-corrosion mortar or cement composition may be applied with a thickness ranging from 1 to 6 mm, preferably 1 to 4 mm, most preferably 1 to 2 mm.

### Repair mortar or cement composition

In another aspect, there is provided a repair mortar or cement composition for repairing, filling and/or spraying damages, cracks, flaws and cavities in mortar or cement structures, comprising a composition according to any one of the previous embodiments and 13.60 to 16.00 % by weight of water relative to the weight of the multi-purpose mortar or cement composition.

Such repair mortar or cement composition may be readily and simply prepared by adding a suitable amount of water to a multi-purpose mortar or cement composition according to any one of the previous embodiments.

Accordingly, there is provided a process for preparing a repair mortar or cement composition for repairing, filling and/or spraying damages, cracks, flaws and cavities in mortar or cement structures, comprising a step of mixing a composition according to any one of the previous embodiments with 13.60 to 16.00 % by weight of water based on the weight of the multi-purpose mortar or cement composition.

In yet another aspect, there is also provided a method for repairing, filling and/or spraying damages, cracks, flaws and cavities in mortar or cement structures, the method comprising applying a repair mortar or cement composition according to any one of the preceding embodiments to a damaged concrete structure. The repair mortar or cement composition, once applied, may be allowed to set and dry, in particular prior to applying any other products.

There is also provided a method for repairing, filling and/or spraying damages, cracks, flaws and cavities in damaged mortar or cement structures, the method comprising:
a) providing a repair mortar or cement composition comprising a multi-purpose composition according to any one of the preceding embodiments and 13,60 to 16,00 % by weight of water relative to the weight of the multi-purpose mortar or cement composition; and
b) applying the repair mortar or cement composition obtained in step a) to the damaged concrete structure.

The water content allows the repair mortar or cement composition to reach the desired consistency enabling its application for repairing, filling and/or spraying damages, cracks, flaws and cavities in mortar or cement structures.

The water content may range between 13,60 to 16,00 %, preferably 14,00 to 16,00 %, more preferably about 15 % by weight of water based on the weight of the multi-purpose mortar or cement composition.

The repair mortar or cement composition can be applied manually or mechanically, with conventional trowel means or suitable machine application such as a wet spray machine.

The repair mortar or cement composition may be applied with a thickness ranging from 2 to 40 mm, preferably 2 to 35 mm, most preferably 2 to 30 mm.

### Resurfacing mortar or cement composition

In another aspect, there is provided a resurfacing mortar or cement composition for surfacing, coating and/or protecting mortar or concrete surfaces, comprising a multi-purpose mortar or cement composition according to any one of the previous embodiments and 16.40 to 18.40 % by weight of water relative to the weight of the multi-purpose mortar or cement composition.

Such resurfacing mortar or cement composition may be readily and simply prepared by adding a suitable amount of water to a multi-purpose mortar or cement composition according to any one of the previous embodiments.

Accordingly, there is provided a process for preparing a resurfacing mortar or cement composition for surfacing, coating and/or protecting mortar or concrete surfaces, comprising a step of mixing a multi-purpose mortar or cement composition according to any one of the previous embodiments with 16.40 to 18.40 % by weight of water based on the weight of the multi-purpose mortar or cement composition.

In yet another aspect, there is also provided a method for surfacing, coating and/or protecting mortar or concrete surfaces, the method comprising applying a resurfacing mortar or cement composition according to any one of the preceding embodiments. The resurfacing mortar or cement composition, once applied, may be allowed to set and dry, in particular prior to applying any other products.

There is also provided a method for surfacing, coating and/or protecting mortar or concrete surfaces, the method comprising:
a) providing a surfacing mortar or cement composition comprising a multi-purpose mortar or cement composition according to any one of the preceding embodiments and 16,40 to 18,40 % by weight of water relative to the weight of the multi-purpose mortar or cement composition; and
b) applying the surfacing mortar or cement composition obtained in step a) to the mortar or concrete surface.

The water content allows the resurfacing mortar or cement composition to reach the desired consistency enabling its application for surfacing, coating and/or protecting mortar or concrete surfaces.

The water content may range between 16,40 to 18,40 %, preferably 16,50 to 18,00 %, more preferably about 17 % by weight of water based on the weight of the multi-purpose mortar or cement composition.

The resurfacing mortar or cement composition may be applied manually or mechanically, with conventional trowel means or suitable machine application such as a wet spray machine.

The resurfacing mortar or cement composition may be applied with a thickness ranging from 2 to 10 mm, preferably 2 to 6 mm, most preferably 2 to 4 mm.

In yet another aspect, there is provided a use of a composition of a multi-purpose mortar or cement composition according to any one of the preceding embodiments for (i) inhibiting the corrosion of steel in mortar or cement structures, (ii) repairing, filling and/or spraying damages, cracks, flaws and cavities in mortar or cement structures and/or (iii) surfacing, coating and/or protecting mortar or concrete surfaces. The various embodiments described herein for the (i) anti-corrosion, (ii) repair and (iii) resurfacing mortar or cement compositions apply mutadis mutandis to the reduction to practice of the afore-mentioned use for the respective uses (i), (ii) and (iii), respectively.

In yet another aspect, there is provided a method for repairing a damaged reinforced concrete structure, comprising steps of:
(i) applying an anti-corrosion mortar or cement composition according to any one of the preceding embodiments to exposed steel pieces of the damaged reinforced concrete structure;
(ii) applying a repair mortar or cement composition according to any one of the preceding embodiments to the reinforced concrete structure obtained in step (i) to repair, fill and/or spray damages, cracks, flaws and cavities present in the structure, and
(iii) smoothing the surface of the repaired concrete structure obtained in step (ii) by applying a resurfacing mortar or cement composition according to any one of the preceding embodiments to the surface.

As the reader will readily appreciate, the method described directly above represents a complete and optimal variant of the three different uses associated with the multi-purpose cement or mortar composition according to the invention (i.e., anti-corrosion, repair and resurfacing applications/uses, respectively). Using the same basic (multi-purpose) cement/mortar composition for all three applications/uses allows a good, if not better, chemical compatibility between the different layers (i.e., anti-corrosion, repair and resurfacing layers) than if a different composition was used for one or two of the applications/uses.

After each step (i), (ii) and/or (iii), the anti-corrosion, repair and resurfacing mortar or cement composition may be allowed to set prior to applying the composition of the next step, or any other product. Again, the various embodiments described herein for the (i) anti-corrosion, (ii) repair and (iii) resurfacing mortar or cement compositions apply mutadis mutandis to the reduction to practice of the afore-mentioned method for repairing a damaged reinforced concrete structure, in particular in effecting the different steps (i), (ii) and (iii), respectively.

Accordingly, the present invention provides a single multi-purpose mortar or cement composition which can be used as a concrete repair system, an anti-corrosion system and/or a concrete surfacing system, merely by adjusting the water content added to the mortar composition. In other words, a single product can be used to carry out three different steps of conventional concrete reparation.

It is the first product of its kind meeting all three European Standards EN 1504-2, EN 1504-3 and EN 1504-7.

Adjusting the water ratio produces three different consistencies which correspond to the application type. In short, there are three different products contained into one bag.

It is easy to mix, easy to apply and very easy to smooth and finish. It also takes up little space and stores for a long time.

The present invention therefore offers the advantages of reduced packaging in size and in amount (since three products are packages into one), and thus fewer waste materials. It is thus more cost efficient, and environmentally friendly than existing products.

Other features and advantages will be apparent to the skilled person in the art upon reading the description and Examples below, which are provided for illustrative purposes.

### BRIEF DESCRIPTION OF THE DRAWINGS

Figure 1 represents a photograph of a metallic plate coated with an anti-corrosion mortar according to Example 1 after immersion for 7 months in water.
The picture shows that there is no corrosion propagation.
Figure 2 represents a photograph of a metallic plate not coated with an anti-corrosion mortar according to the invention, after immersion for 7 months in water. The picture shows that there is strong propagation of corrosion on the plate.
Figure 3 represents a schematic view of the assembly used in a shear adhesion test of coated steel bars to concrete, as described in the corrosion protection test of Example 5.
Figure 4 represents a photo of an actual specimen used to conduct the corrosion protection test described in Example 5. The photo shows a plate in the centre, and four bars of different diameters, all coated with a test mortar.
Figures 5A and 5B represent two side views of the specimen of figure 4, after the different storage stages described in EN 15183.

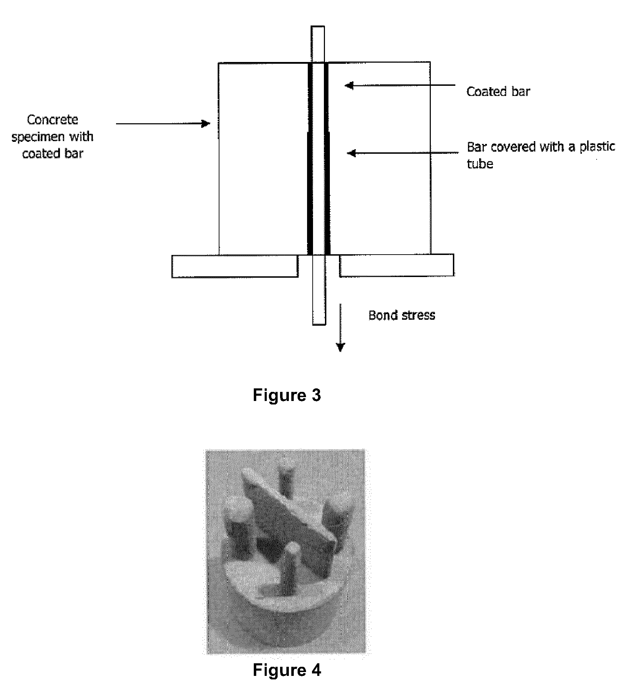

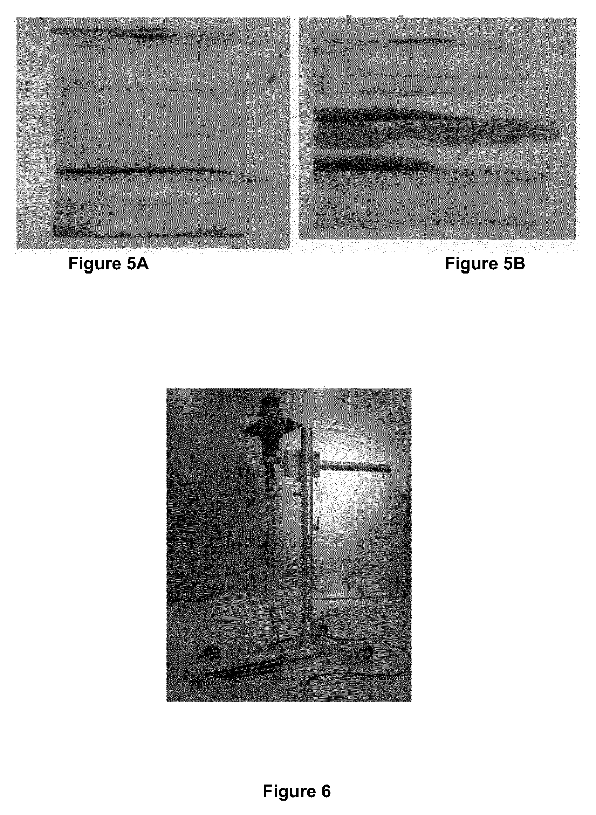

The pictures of Figures 4, 5A and 5B are presented for illustrative purposes only: the mortar coating the specimens is not a mortar or cement composition according to the present invention.

Figure 6 pictures an example of mixer that may be used to mix with water the multi-purpose mortar or cement compositions according to the invention to prepare (i) repair, (ii) anti-corrosion, or (iii) resurfacing mortar or cement compositions according to the present invention.

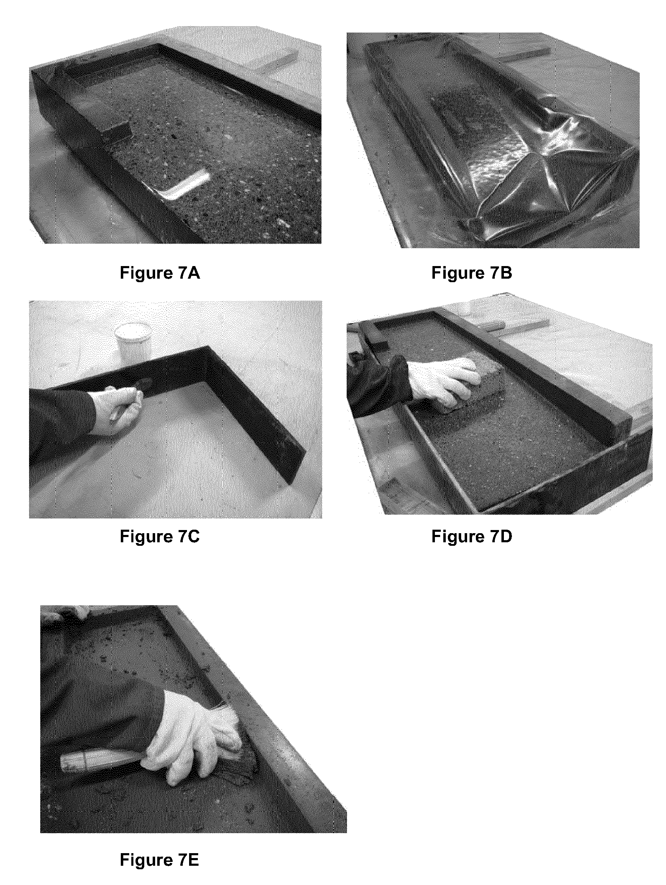

Figures 7A through 7H depict the various stages of the Baenziger block test described in Example 6.

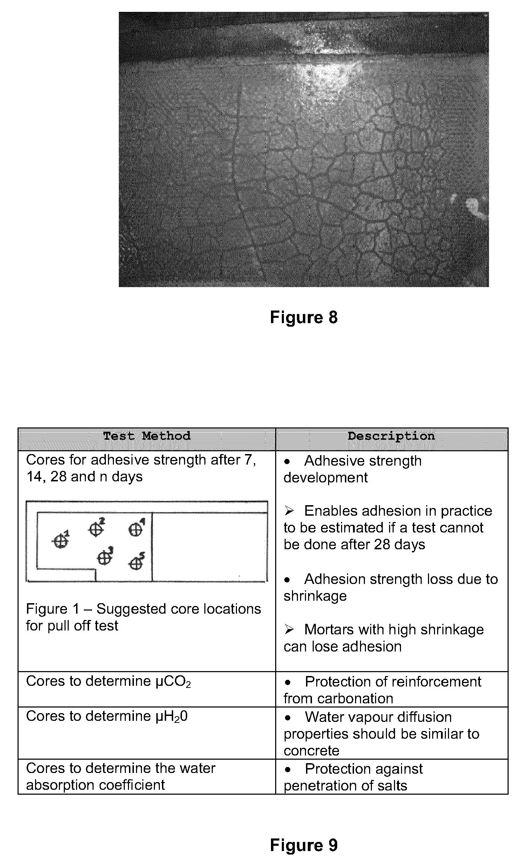

Figure 8 depicts the revelation of cracks by spraying a mortar surface with water to enhance crack lines in a Baenziger test according to Example 6. In the picture, the mortar is not a mortar or cement composition according to the present invention.

Figure 9 depicts a table summarizing additional test methods to be used in the Baenziger if the mortar has not cracked within the defined period.

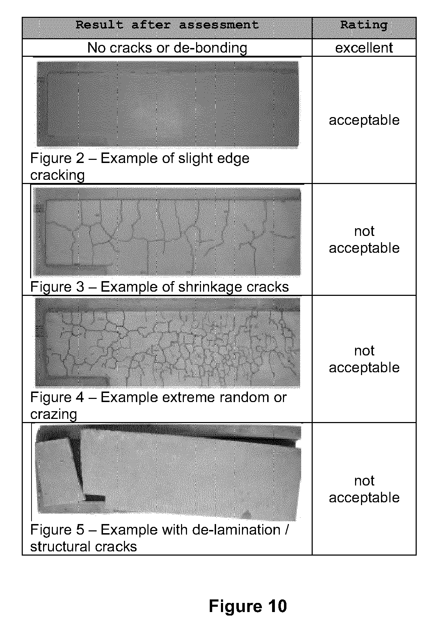

Figure 10 depicts typical results after assessment of mortar quality under the Baenziger test (Example 6). In the pictures, the mortar is not a mortar or cement composition according to the present invention.

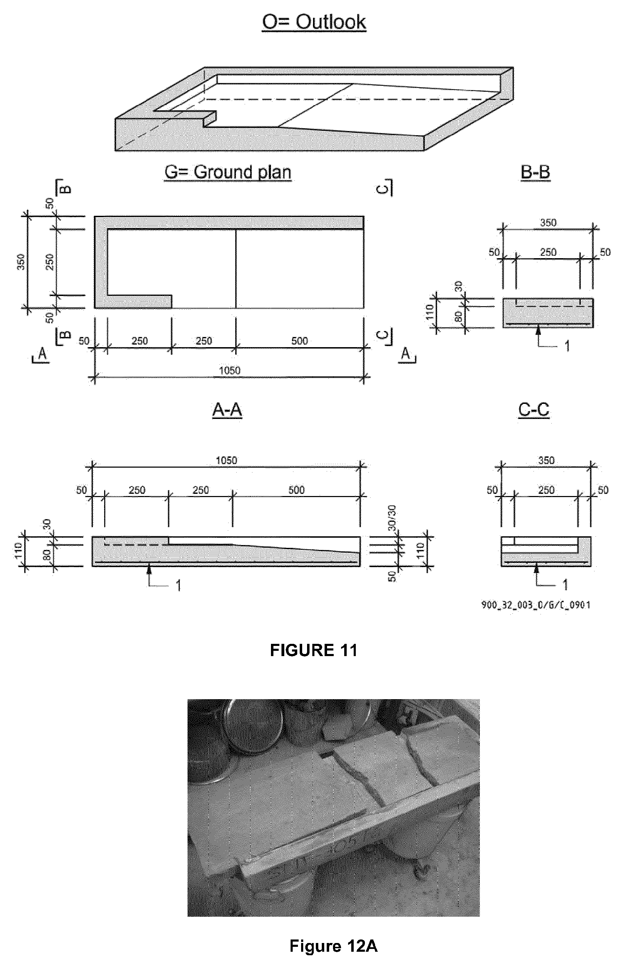

Figure 11 depicts an exemplary Baenziger block specification.

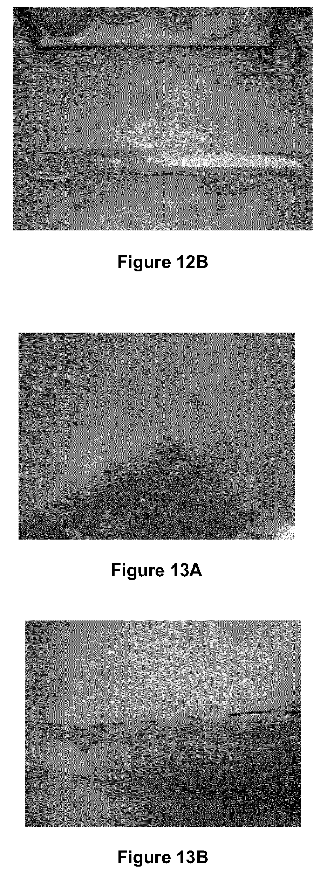

Figures 12A and 12B depict examples of mortars that perform poorly under the Baenziger test (Example 6). In the pictures, the mortar is not a mortar or cement composition according to the present invention.

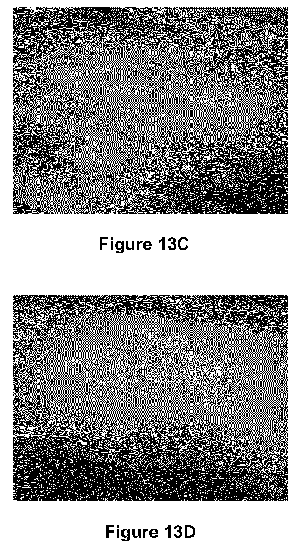

Figures 13A through 13D depict examples of test results under the Baenziger test (Example 6) of the repair mortar or cement composition of Example 3 according to the present invention. As evidenced in the pictures, the test revealed not cracks and to shrinkage problems.

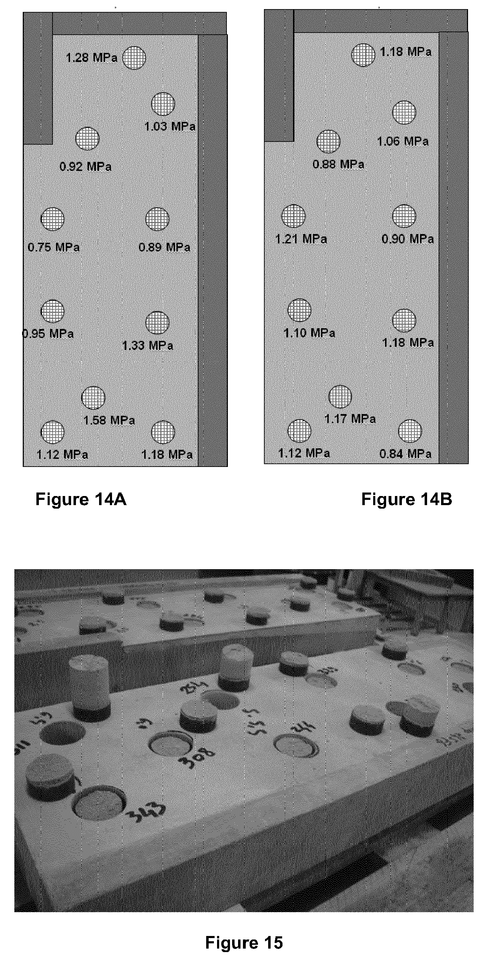

Figures 14A and 14B depict schematic views of Baenziger blocks of a repair mortar or cement composition of Example 3 in the measurement of bond stress by pull-off as described in Example 7, at full thickness and half-thickness, respectively. Each drawing indicates the bond strength measured at each indicated point of the Baenziger block.

Figure 15 is a photo of a Baenziger block of a repair mortar or cement composition according to the present invention that was subjected to the measurement of bond stress by pull-off as described in Example 7. The tested mortar or cement composition was prepared according to Example 1, except that 0.500% by weight of Sika ASA 40(anti-shrinkage agent, SIKA) was used instead of Dispelair P 430 (% by weight, calculated on the total weight of the composition).

### EQUIVALENTS

The representative examples that follow are intended to help illustrate the invention, and are not intended to, nor should they be construed to, limit the scope of the invention. Indeed, various modifications of the invention and many further embodiments thereof, in addition to those shown and described herein, will become apparent to those skilled in the art from the full contents of this document, including the examples which follow and the references to the scientific and patent literature cited herein. It should further be appreciated that the contents of those cited references are incorporated herein by reference to help illustrate the state of the art.

The following examples contain important additional information, exemplification and guidance that can be adapted to the practice of this invention in its various embodiments and the equivalents thereof.

### EXAMPLES

The compositions of this invention and their preparation can be understood further by the examples that illustrate some of the processes by which these compositions are prepared or used. It will be appreciated, however, that these examples do not limit the invention. Variations of the invention, now known or further developed, are considered to fall within the scope of the present invention as described herein and as hereinafter claimed.

### Example 1. Multi-purpose mortar or cement composition

The following starting materials are mixed and blended to form 25 kg of a multi-purpose mortar or cement composition according to the invention:
- 25.755% of cement CPA CEM I 42.5 R (from Gaurain)(CIMENTS CALCIA / ITALCEMENTI GROUP)
- 7.790% of calcareous filler BEMAP® N°12 (bulk) (SOCIETE DES CABRONATES PIKETTI)
- 21.500% of SB sand (bulk)(FULCHIRON)
- 21.500% of NE 34® sand (bulk)(SIBELCO)
- 16.000% Of TH 158® sand (bulk)(SABLIERES DE THIEULIN)
- 0.100% of Rhoximat DF 6352 DD® (MOMENTIVE)
- 0.050% of Sikament FF 86® powder (30 kg) (SIKA)
- 1.000% of Socal 31® (UNIVAR)
- 0.020% of chromatex C ® (TRICOSAL CHEMIE)
- 0.950% of sodium nitrite (bag)(BRENNTAG)
- 0.200% of fibre XL 325 (CALDIC BELGIUM)
- 1.500% of calcium formate (EK)(AMIK)
- 0.500% of Expan-K (MITSUI&CO)
- 0.035% of Unifoam AZ ultra 1050 (box)(BRENNTAG)
- 0.100% of tris(hydroxymethyl)aminomethane (bag) (JOHNSON

### MATTHEY)

- 1.000% of Denka CSA 20 (not sieved) (bag)(NEUCHEM SRL)
- 0.500% of Dispelair P 430 (bag)(BLACKBURN CHEMICALS)
- 1.500% of Elotex FL 1210 (bag)(ELOTEX AG)
   (% by weight, calculated on the total weight of the composition).

The product is in the form of a grey powder, and has a storage shelf-life of 12 months from production if stored properly in undamaged original sealed packaging in dry cooled conditions.

### Example 2. Anti-corrosion mortar or cement composition

4.6 to 5.1 liters of water were placed into a suitable mixing container. While stirring, 25 kg of the multi-purpose mortar or cement composition prepared in Example 1 was slowly added into the water. The resulting mixture was stirred homogeneously at slow speed (∼500 rpm) for at least 3 minutes using a mixer with single or double mixing paddle, such as that shown in Figure 6, to form a mortar or cement having the consistency of a paint.

The resulting anti-corrosion mortar had a pot-life of about 30 minutes.

A first layer of the resulting anti-corrosion mortar was applied lightly using a clean brush around the whole exposed circumference of the steel reinforcement of a damaged concrete structure, by dabbing or lightly touching the mortar composition onto the steel to form a thin layer. Care was taken not to over-brush on the surface so as to not wipe away the mortar.

After the first layer has dried (approximately 1 hour at 21 °C, as tested by the fingernail method on the surface), any loose material was wiped away. The first layer was then pre-wet. Excess water was removed, and a second layer of the mortar composition was applied until the total application thickness was ≥ 2 mm.

For best results, two brushes may be used to ensure coverage of the steel bar circumference.

| **Requirements according to EN 1504-7 (mixing ratio 19% as corrosion protection)** | | |
|---|---|---|
| | **Test Method** | **Requirement** |
| **Corrosion protection** | EN 15183 | Coated zones of steel free of corrosion and rust creep at the ground plate edge < 1 mm |
| **Shear adhesion (coated steel to concrete)** | EN 15184 | Bond stress with coated bars is at least 80% of reference bond stress for un-coated bars |

### Example 3. Repair mortar or cement composition

3.4 to 4.0 liters of water were placed into a suitable mixing container. While stirring, 25 kg of the multi-purpose mortar or cement composition prepared in Example 1 was slowly added into the water. The resulting mixture was stirred homogeneously at slow speed (∼500 rpm) for at least 3 minutes using a hand-mixer machine with single or double mixing paddle to form a mortar or cement having a thick consistency.

The resulting repair mortar had a pot-life of about 60 minutes.

The resulting repair mortar was pressed firmly on the repair area, while ensuring that all the substrate pores and pits were filled, using traditional trowel techniques or a suitable machine application (wet spray method).

If the repair depth exceeds the maximum layer thickness, the repair mortar may be built up in layers. In that case, the first layer should be allowed to dry before applying subsequent layers.

The repair mortar was applied on the damaged concrete structure treated in Example 2.

| **Mechanical**/**physical properties (20°C in laboratory conditions)** | | | |
|---|---|---|---|
| | **1 day** | **7 days** | **28 days** |
| **Compressive strength** | ∼5 N/mm² (MPa) | ∼22 N/mm² (MPa) | ∼30 N/mm² (MPa) |
| **Flexural strength** | ∼1 N/mm² (MPa) | ∼4 N/mm² (MPa) | ∼7 N/mm² (MPa) |
| **Shrinkage** | ∼600 µm/m @ 21 °C 65% RH at 28 days and 15%water:powder ratio (EN 12617-4) | | |

| **Requirements according to EN 1504-3 (mixing ratio 15% as repair mortar)** | | |
|---|---|---|
| | **Test Method** | **Requirement (R2)** |
| **Compressive strength** | EN 12190 | ≥ 15 N/mm² (MPa) |
| **Chloride ion content** | EN 1015-17 | ≤ 0.05% |
| **Adhesive bond** | EN 1542 | ≥ 0.8 N/mm² (MPa) |
| **Restrained shrinkage/expansion** | EN 12617-4 | ≥ 0.8 N/mm² (MPa) |
| **Carbonation resistance** | EN 13295 | Passes (no requirement) |
| **Elastic modulus** | EN 13412 | Declared value (no requirement) |
| **Thermal compatibility Part 1: Freeze-thaw** | EN 13687-2 | ≥ 0.8 N/mm² (MPa) |
| **Thermal compatibility Part 4: Freeze-thaw** | EN 13687-2 | ≥ 0.8 N/mm² (MPa)≥ |
| **Capillary absorption** | EN 13057 | ≤ 0.5 kg.m⁻².h^{-0.5} |

### Example 4. Resurfacing mortar or cement composition

4.1 to 4.6 liters of water were placed into a suitable mixing container. While stirring, 25 kg of the multi-purpose mortar or cement composition prepared in Example 1 was slowly added into the water. The resulting mixture was stirred homogeneously at slow speed (∼500 rpm) for at least 3 minutes using a hand-mixer machine with single or double mixing paddle to form a mortar or cement having a consistency intermediate between the compositions obtained in Examples 2 and 3.

The resulting resurfacing mortar had a pot-life of about 40 minutes.

The resulting resurfacing mortar was applied to a concrete surface by conventional methods.

When applied in layers, the surface of the first layer was first rougher prior to application of the subsequent layer.

When the first layer has hardened, any laitance layer was removed and pre-wet prior to applying the second layer. For best results, the first layer should be allowed to dry before applying the subsequent layers.

| **Requirements according to EN 1504-2 (mixing ratio 17% as resurfacing coating)** | | |
|---|---|---|
| | **Test Method** | **Requirement** |
| **Compressive strength** | EN 12190 | No requirement |
| **Permeability to water vapour** | ISO 7783-2 | Class I Sd ≤ 5 m |
| **Capillary absorption and permeability to water vapour** | EN 1062-3 | ≤ 0.10 kg.m⁻².h^{-0.5} |
| **Permeability to CO₂** | EN 1062-6 | Sd > 50 m |
| **Adhesion pull off** | EN 1542 | ≥ 1.0 N/mm² (MPa) |

### Example 5. Corrosion protection test

### 1- Corrosion protection test. EN 15183:2007

### Protocol

- A plate and four bars of steel were prepared for the test.

Following the manufacturer instructions (two layers, total thickness 6 mm - 6 kg/m2 per layer) the product according to Example 2 was prepared and was applied, covering completely the plate and the steel bars, being left to recover.
- After the product was allowed to harden (7 days), it was placed in the cylindrical mold, and then it was covered up with concrete just to the half of the height of the bars and plate.
- The sample was subjected to the corrosion test under the conditions contemplated in paragraph 6.2 of standard EN 15183:2007, and understanding the following consecutive stages:
   - Stage 1: 10 cycles according EN ISO 6270-2:2006
   - Stage 2: 10 cycles according EN ISO 6988:1996
   - Stage 3: 120 hours according EN 60068-2-11:2000
- Once the test was finished, the process for assessing the condition of the elements "Plate" and "Bar" was carried out according to the requirements contemplated in the paragraph 5.2 of the standard 1504-7:2007, as follows:
   1- Visual inspection of the sample once extracted from the chamber test.
   2- Proceed to remove the concrete for visual inspection of the elements "Plate" and "Bars" in the corresponding zones that were submerged in it.
   3- Finally, eliminate (by mechanical procedures) the covering of those zones of the element "Plate" that were covered (and also were initially submerged in the concrete) to determinate the progression of the underlying corrosion.

### TEST CONDITIONS:

### - Ist stage: 10 cycles according EN ISO 6270-2:

- Machine: DYCOMETAL, model VCK-300
- Sample position: Horizontal
- Every cycle consists: 8 hours at 40°C ± 3°C with closed chamber and 16 hours at 21°C ± 2°C with open chamber and relative humidity 75%.

The sample was cleaned by wash with water and dried by compressed air.

### - 2nd stage: 10 cycles according EN ISO 6988:

- Machine: DYCOMETAL, model VCK-300
- Sulphur dioxide: Addition of 0.2 liters for cycle
- Sample position: Horizontal
- Each cycle consists: 8 hours at 40°C ± 3°C in an environment of SO2 with a relative humidity of 100 % and 16 hours of cooling up to a temperature set of 23°C ± 3.0°C and a relative humidity of the air of 50 % ± 5 %.

The cleaning of the sample has been effected by wash with and dried by compressed air.

### - 3rd stage: EN 60068-2-11

- Machine: DYCOMETAL, model SSCK1000
- Densimeter: LUDWIG SCHNEIDER, model L 50
- Temperature: 35.0°C ± 1.0°C
- Saline prepared solution:
   - Water conductivity: 2.870 µS/cm
   - Concentration saline solution: NaCl 5% (p/v)
   - pH: 6.6
   - Density: 1.032 g/cm3
- Collected solution:
   - pH: 6.5
   - Volume: 1.2 cm3/hour 80 cm2, and 1.8 cm3/hour 80 cm2.
- Sample position: Horizontal
- Maximum time of exhibition to the saline environment: 120 hours The sample was cleaned by wash with and dried by compressed air.

### RESULTS:

Once the corrosion test was finished, and the sample was extracted from the interior of the chamber (after having carried out three consecutive stages, according to the conditions indicated in paragraph 6.2 of standard 15183:2007) the following observations can be made:
- The exposed surfaces present red corrosion of a located form, on the lateral edges of the element "Plate". In the elements "Bars", no trace of rust is detected.
- Once eliminated (by mechanical procedures), the covering zones of the element "Plate" in which still remaining , start the process to value the condition of them and according to the requirements contemplated in paragraph 5.2 of standard EN 1504-7:2007. The results are reflected in the following table:

| **ELEMENTS** | | **FINAL RESULTS** **(UNE-EN 1504-7:2007)** | |
|---|---|---|---|
| | | **Corrosion ⁽¹⁾** | **Result ⁽²⁾** |
| **"Bars"** | **Ø 8 mm** | Corrosion is not observed | **PASS** |
| | **Ø 16 mm** | Corrosion is not observed | **PASS** |
| **"Plate"** | | Corrosion is not observed | **PASS** |

| | | | |
|---|---|---|---|
| **NOTES: (1):** The standard EN 1504-7:2007, establishes that the progression from the edge zones in the element "Plate" must not overcome the distance of 1 mm. While for the elements "Bar" the mentioned specification does not determine any requirement. **(2):** In case of the elements "Bar", the valuation is carried out exclusively on the basis of the aspect of those covered zones that were absorbed in the concrete. Whereas for the elements "Plate", the progression of the corrosion from its edge zones also has to be considered, and once has been extracted the covering of the corresponding zones that also were absorbed in the concrete. | | | |

### 2- Shear adhesion of coated steel to concrete . EN 15184:2008

We tested three coated bars and three uncoated bars (reference bars).

The adhesion length of the bar was 5 times the diameter of the bar (80 mm), with the rest of the bar covered by a plastic tube leaving the extremity free. Following the manufacturer instructions (two layers, total thickness 6 mm - 6 kg/m² per layer) the product according to example 2 was prepared, and was applied.

The reference slabs are specimens of 200 x 200 x 200 mm made with aggregates with a maximum size between 16 and 20 mm with reference concrete type C (0.70) according to EN 1766:2000.

After 72 hours of curing time covered with a wet cloth, they are removed from its mould. Finally, they were preserved at 21 °C and 60% H.R during 25 days,

### RESULTS:

| **UNCOATED SPECIMENT** | | | **COATED SPECIMEN** | | |
|---|---|---|---|---|---|
| Specimen n° | Bond stress at a displacement of 0.1 mm (kN) | Type of failure | Specimen n° | Bond stress at a displacement of 0.1 mm (kN) | Type of failure |
| 1 | 5.45 | Type 2 | 1 | 4.95 | Type 2 |
| 2 | 5.80 | Type 2 | 2 | 4.76 | Type 2 |
| 3 | 5.20 | Type 2 | 3 | 4.69 | Type 2 |
| **Average** | **5.48** | | **Average** | **4.80** | |
| **Bond stress of coated specimen is 87.6% of the reference bond stress (uncoated specimen)** | | | | | |

Type of failure:
Type 1: Extraction of the bar from the sealing product.
Type 2: Extraction of the reinforcement bar and sealing product from concrete.
Type 3: Breakage in the sealing product itself.

According to EN 1504-7:2007, the test is considered to have been passed if the bond stress determined with the coated bars is in each case at least 80 % of the reference bond stress determined for the uncoated bars.

### Example 6. Baenziger block test

The purpose of this test is to assess the crack behaviour characteristics of mortars during development or testing (e.g. competitor products). The special design of this Baenziger Block allows evaluation of long term performance and susceptibility of the material to crack under real-life conditions.

For example, the Baenziger block test may be used to test the repair mortar or cement compositions of the present invention.

### 1. The Baenziger Block

### 1.1 Introduction

Early failure of mortars can be a result of a wide range of physicochemical processes. Cracking often occurs when excessive tensile stresses and strains exceed the resistance capability of the material. These forces are often caused by drying shrinkage and occur in early stages of curing. When interaction stresses and strains between the material and substrate are great enough, de-lamination can occur.

The Baenziger Block has been specifically designed to generate these stresses and strains at precise locations in order to allow the mortars to crack if they are not well formulated. This document is a step by step procedure of how to prepare, test, observe and interpret results using the Baenziger Block.

### 1.2 Theory

The Baenziger Block has practical relevance by replicating common stresses and strain conditions and incorporating them at specific locations. These are:
1) Solid concrete substrate so no deformation due to mortar shrinkage is possible.
2) Sand blasted substrate to replicate an adequate prepared substrate.
3) 90 degree square arises as opposed to bevelled edges for worst case scenario.
4) Variable repair thickness so there is a higher standard for slump resistance and crack resistance.
5) An indented corner to test the mortar's ability to withstand radial stresses from all directions.
6) Two zones to replicate ability of material to withstand restrained and unrestrained shrinkage.

### 1.3 Advantages

This test helps reduce product development time enabling direct and meaningful comparisons. It can also be used to compare different products available in a given market. The advantages are summarised as follows.
1) Efficient - Quicker time taken to introduce new product to customers.
2) Development - Formulations which do not meet the requirements for practical use do not undergo further time-consuming tests.
3) Size - Fit to the volume of 25kg repair mortar mix
4) Testing - allows different types of testing in laboratory.
5) Quality Control - Production batches can quickly be checked in a practical way against results from laboratory development batches.
6) Continuous Assessment - When failure occurs, it is easy to establish whether there are quality differences between production batches.
7) Competitors - Direct and relevant comparisons using competitors' products are possible.

### 1.4 Manufacture information

The Baenziger Block is a specially designed pre-fabricated test substrate developed by Heinz Baenziger and Alexander Bleibler. It is used to simulate real-life job situations. Refer to Figure 11 for dimensions.

**Table 1: Baenziger Block Technical Summary**

| | |
|---|---|
| | Normal concrete |
| Material: | Cement content 300 - 350 kg/m³. |
| | Portland Cement CEM I 42.5 |
| Aggregate (gravel): | 0-16 mm to EN 933-1 |
| Reinforcement: | High Yield Ribbed 6 mm diameter bars at 100mm centres |
| Surface finish: | Sand blasted to standard EN 1766 (minimum 2 mm roughness) |
| Baenziger Block volume: | approx. 28 litre |
| Weight: | Unfilled: approx. 60 kg |
| | Filled: approx. 81 kg |
| Special requirements: | Min 2 months old before used in tests |

### 2. Sample Preparation

### 2.1 General remarks:

- The Baenziger Block needs to have a minimum age of 2 months.
- The Baenziger Block is designed for mortar applied in a layer thickness of 30 - 60 mm. If a specific testing material is used in lower layer thickness (see PDS), apply only the allowed maximum thickness.
- Test is to be carried out in the laboratory with stable conditions (ideally 21°C, 60% relative humidity), similar to EN 1504-3 conditions.
- The test block has to be cleaned and shall be free from dust, loose material, surface contamination and materials which reduce bond or prevent suction or wetting by repair materials.
- Use onlv full packaging units (pails, bags) for mixing to get a homogeneous mixture of the mortar.
- Measure density and air content of each mortar mixture for quality control.
- Application is normally horizontal, but may also be vertical if necessary.

### 2.2 Application

- Pre-damp the block substrate prior to application. (Figures 7A and 7B)
- To be carried out approximately 24 hours before application of the mortar.
- Apply water to all surfaces in contact with mortar including top surface.
- Excess water is to be poured off the substrate surfaces.
- Aim of wetting is to reach a good water saturation to prevent capillary absorption of the mixed mortar on the substrate.
- Avoid water evaporation by covering the block surfaces with plastic sheet after wetting.

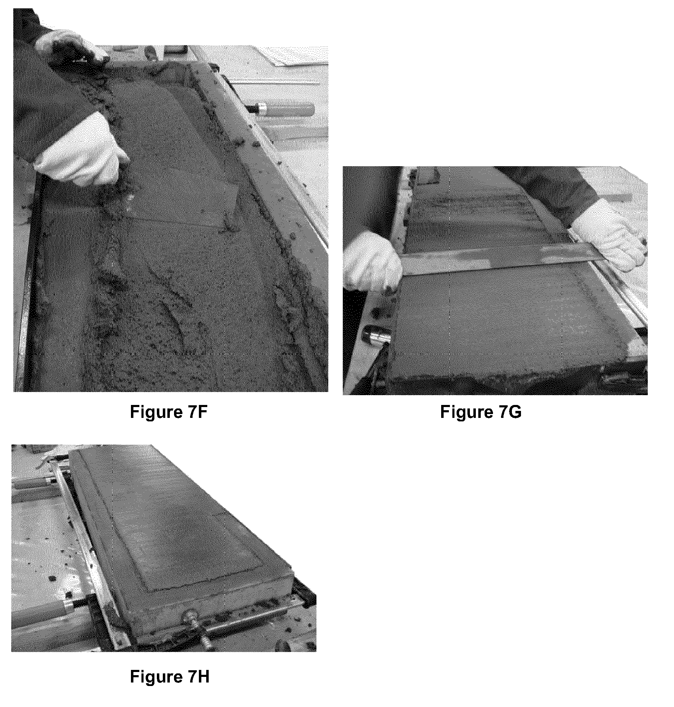

Before clamping into position, apply mould release agent on iron formwork (wood or plastic also allowable). Do not paint iron formwork after clamping as some mould release agent may spill on to Baenziger Block. Use appropriate mould release agent according to the type of formwork. (Figure 7C) Before applying repair mortar (or bonding primer, if necessary) remove excess water by drying surface with a towel or sponge. The surface shall be sufficiently damp without being wet. The surface shall achieve a dark matt appearance without glistening (no free water on the surface). (Figure 7D) After clamping iron formwork in position apply mortar directly to substrate (wet on wet to bonding primer where necessary). (Figure 7E)
Apply mortar by firmly pressing first into corners and walls of block using trowel (to build strong interface), followed by filling the volume in one layer. (Figure 7F)
Level the mortar surface scrapping off any excess using ruler. If the mortar is also to be used as smoothing mortar: gently finish surface using rectangular trowel. Otherwise no post treatment of mortar is necessary. Do not cover. (Figure 7G)
Store Baenziger Block in laboratory at 21 °C /60% relative humidity. If different products are to be compared directly with one another, the samples must be mixed at the same time or very shortly after one another. Remove the formwork 1 hour after setting time. Refer to the Product Data Sheet for setting time or determine setting time in accordance with EN 196-3. (Figure 7H)

### 3. Test Procedures

### 3.1 Cracks and Delaminations

To enhance appearance of cracks spray surface lightly with water.
Wait a few minutes for the water on the surface to evaporate in order to reveal established cracking. Mark visible cracks with different coloured pens. Use different colour pens for different days to show stages of cracking. Appearance of cracks must be checked daily during the first week, thereafter weekly. Cracks normally appear within 2 months. (Figure 8)

Repair mortar is to be checked daily for sounds of de-lamination by rubbing surface with metallic object (hammer test). Mark de-lamination zones with a pen.

**Table 2: Summary of observation criteria**

| **Observation** | **Model Result** |
|---|---|
| Surface Characterisitcs | ▪ Lattance / glossy finish (Poor adhesion for subsequent filers or coatings |
| | ▪ Smooth homogeneous |
| Surface discolouration | ▪ No discolouration |
| Cracks along arises (fig 1) | |
| after the start of setting | ▪ Early shrinkage: Objective-no cracks |
| after 24 atEr 24 hours | ▪ Early shrinkage: Objective-no cracks |
| after n days | ▪ Late shrinkage: Objective-no cracks |
| Cracks of the mortar transverse and longitidinal to the member | ▪ Cracks due to shrinkage: Objective no cracks |
| Random "Cobweb" cracking (fig 4) | ▪ Water retention capacity: Objective-no cracks |
| | ➢ Sensitivity to drying |

### 3.3 Additional Assessments

If the repair mortar has not cracked within the defined period, additional tests can be carried out (not mandatory), as described in Figure 9.

### 4.4 Method of Measuring Crack Depth

This method can be used to measure the depths of very fine cracks.
A water based epoxy resin mixed with a pigment can be used. For example, epoxy resin Sikafloor-156 components A + B (1:1) may be mixed with 0.8%.weight of floorpaste-3 red, SAP code 2771 as pigment.
Immediately after mixing apply firmly the liquid resin onto top surface of mortar. Press down on resin just after application to ensure cracks are filled.
Leave resin to dry for minimum 24 hours.
Carefully bore a core sample from the mortar at the crack location and cut sample to reveal crack depths.
Exemplary results and interpretation guidelines are given in Figure 10.

Results obtained for the repair mortar or cement composition of Example 3 are provided in Figures 13A through 13D.

### Example 7. Measurement of bond stress by pull-off

The mortar/cement block obtained in Example 6 was core drilled ("carotté" in French) at several selected test locations randomly spread over the surface of the mortar/cement block, to get a representative measurement (cf. figures 14 and 15). Core drilling was carried out using a diamond coring barrel (WEKA) ("carottier diamanté" in French) according to a 90 ± 1° relative to the surface. The mortar/cement block was core-drilled through half the block thickness (Figure 14A) or the full block thickness (Figure 14B).
A dolly ("pastille" in French) was adhesively bonded to each cored surface ("surface des carottes" in French) after carefully cleaning the surface of each dolly and core ("carotte" in French). The bond stress by pull-off was measured for each core("carotte" in French) using a Sattec dynamometer.

The results obtained for the repair mortar/cement composition of Example 3 are given in Figures 14A (full thickness) and 14B (half thickness). No cracks or delamination is observed in all cases.

### Example 8. Comparative example/corrosion protection

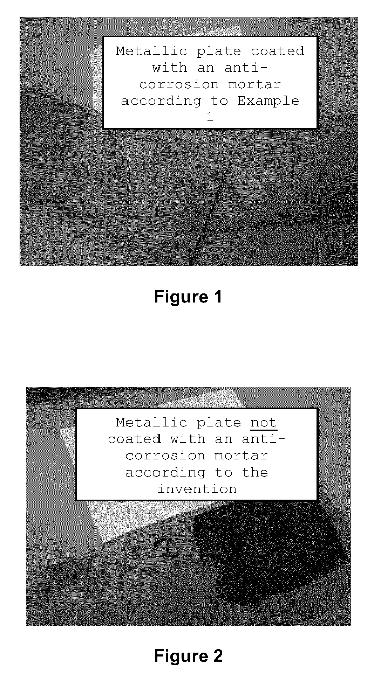

A test metallic plate was coated with anti-corrosion mortar prepared according to Example 1. Only one lateral edge ("tranche" in French) is free of material (accessible to corrosion). The specimen was immerged in a 5% NaCl solution at 35°C (Fig. 1).

A control virgin metallic plate (i.e., not coated with an anti-corrosion mortar according to the present invention) was subjected to the same immersion treatment (Fig. 2).
After immersion:
- the free lateral edge ("tranche" in French) of each plate was visually inspected, and
- the mortar was removed from the first plate and the corrosion propagation was comparatively evaluated for each plate.

The comparative results show that the anti-corrosion mortar significantly prevented corrosion of the test plate.

While we have described a number of embodiments of this invention, it is apparent that the basic examples may be altered to provide other embodiments that utilize the compositions and methods of this invention. Therefore, it will be appreciated that the scope of this invention is to be defined by the appended claims rather than by the specific embodiments that have been represented by way of example.

## Claims

1. A multi-purpose mortar or cement composition for (i) inhibiting the corrosion of steel in mortar or cement structures, (ii) repairing, filling and/or spraying damages, cracks, flaws and cavities in mortar or cement structures and (iii) surfacing, coating and/or protecting mortar or concrete surfaces comprising at least one cementitious binder, at least one filler and sands.

2. A multi-purpose mortar or cement composition according to claim 1 comprising at least one fibre component.

3. A multi-purpose mortar or cement composition according to claim 1 or 2 comprising at least one polymer, redispersable polymer or co-polymer.

4. A multi-purpose mortar or cement composition according to at least one of claims 1 - 3 comprising:
at least one fibre component
at least one anti-corrosion agent
at least one polymer, redispersable polymer or co-polymer.

5. A multi-purpose mortar or cement composition according to at least one of claims 1 - 4 comprising (% by weight, calculated on the total weight of the composition):
15 to 40 % of the at least one cementitious binder
50 to 80 % of the at least one filler and sands
0.05 to 1.2 % of at least one fibre component
0.05 to 3.2 % of at least one anti-corrosion agent
0.1 to 3.5 % of at least one polymer, redispersable polymer or co-polymer;
wherein the sum of the weight % of the aforementioned components is 100%.

6. A multi-purpose mortar or cement composition according to at least one of claims 1 - 5 comprising:
at least one antifoam agent
at least one fibre component
at least one anti-corrosion agent
at least one plasticizer or superplasticizer
at least one accelerator
at least one anti-shrinkage agent
and at least one polymer, redispersable polymer or co-polymer.

7. A multi-purpose mortar or cement composition according to at least one of claims 1 - 6 comprising:
15 to 40 % of at least one cementitious binder
50 to 80 % of at least one filler and sands
0.05 to 1.5 % of at least one antifoam agent
0.05 to 1.2 % of at least one fibre component
0.05 to 3.2 % of at least one anti-corrosion agent
0.05 to 1.2 % of at least one plasticizer or superplasticizer
0.1 to 3.5 % of at least one accelerator
0.1 to 4.2 % of at least one anti-shrinkage agent
0.1 to 3.5 % of at least one polymer, redispersable polymer or co-polymer,
in particular selected from polyvinyl acetate or polyvinyl ester, or a mixture thereof;
wherein the sum of the weight % of the aforementioned components is 100%.

8. A multi-purpose mortar or cement composition according to at least one of claims 1 - 7, wherein the cementitious binder is a Portland cement, a calcium aluminate cement (CAC), a sulfo aluminate cement, a gypsum-based binder, lime, hydrated lime, silica fume, or a mixture thereof.

9. A multi-purpose mortar or cement composition according to at least one of claims 1 - 8, wherein the filler or sands are siliceous sands or filler having a sieve curve between 0.05mm and 1.5mm, calcareous filler, precipitated ultra fine calcium carbonate, or a mixture thereof.

10. A multi-purpose mortar or cement composition according to at least one of claims 1 - 9, wherein the fibre component is polyolefines fibres, nitryl, polyvinyl alcohol (PVA), glass with or without anti-alkaline protection, cellulose, flax or hemp fibre component, or a mixture thereof.

11. A multi-purpose mortar or cement composition according to at least one of claims 1 - 10, wherein the anti-corrosion agent is sodium nitrite, calcium nitrite, dicyclohexylamine nitrite, mono-ethanolamine benzoate, ethanolamine benzoate, ethanolamine, diethanolamine, N.N-dimethylethanolamine, TRIS(hydroxymethyl-aminomethan), or a mixture thereof.

12. A wet mortar or cement composition comprising a multi-purpose mortar or cement composition according to any one of claims 1 - 10 and 13.60 to 20.40 % by weight of water relative to the weight of the multi-purpose mortar or cement composition.

13. Use of a composition of a multi-purpose mortar or cement composition according to any one of claims 1 to 11 for (i) inhibiting the corrosion of steel in mortar or cement structures, (ii) repairing, filling and/or spraying damages, cracks, flaws and cavities in mortar or cement structures and (iii) surfacing, coating and/or protecting mortar or concrete surfaces.

14. A method for preparing a composition of a multi-purpose mortar or cement composition according to any one of claims 1 to 11 by mixing and blending together all of the components.

15. A method comprising (i) inhibiting the corrosion of steel in mortar or cement structures, (ii) repairing, filling and/or spraying damages, cracks, flaws and cavities in mortar or cement structures and (iii) surfacing, coating and/or protecting mortar or concrete surfaces, by using a composition of a multi-purpose mortar or cement composition according to any one of claims 1 to 11 or by using a wet mortar or cement composition according to claim 12.
